# EUROPÄISCHE PATENTSCHRIFT

(11) **EP 1 713 970 B1**
(45) Veröffentlichungstag und Bekanntmachung des Hinweises auf die Patenterteilung: **30.03.2011**
(21) Anmeldenummer: 05707027.8
(22) Anmeldetag: 27.01.2005
(51) Int. Cl.: D06M 15/267, D06M 15/263, D06M 15/643, D06M 11/79, D06M 15/31, B01D 19/04

(54) **VERFAHREN ZUR BEHANDLUNG VON TEXTIL**
METHOD FOR TREATING TEXTILES
PROCEDE DE TRAITEMENT DE TEXTILE

(30) Priorität: 29.01.2004 DE 102004004722
(43) Veröffentlichungstag der Anmeldung: 25.10.2006
(73) Patentinhaber: BASF SE, 67056 Ludwigshafen (DE)
(72) Erfinder: SENF, Andreas, 91320 Ebermannstadt/Gasseldorf (DE); SIMENC, Toni, 68199 Mannheim (DE)
(86) Internationale Anmeldenummer: PCT/EP2005/000778
(87) Internationale Veröffentlichungsnummer: WO 2005/073458

(56) Entgegenhaltungen:
- EP-A- 0 075 433
- EP-A- 1 075 864
- DE-A1- 4 331 228

## Beschreibung

Die vorliegende Erfindung betrifft ein Verfahren zur Behandlung von Textil, dadurch gekennzeichnet, dass man es behandelt mit
(a) mindestens einem Alkalimetall- oder Ammoniumsalz eines Copolymerisats, welches erhältlich ist durch Copolymerisation von
   (a1) 1 bis 20 Gew.-% (Meth)acrylsäure,
   (a2) 2 bis 20 Gew.-% (Meth)acrylnitril,
   (a3) 30 bis 80 Gew.-% mindestens eines Comonomers der allgemeinen Formel 1 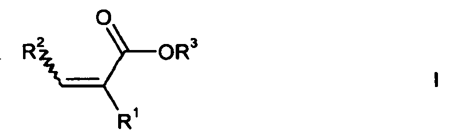
   (a4) 0 bis 20 Gew.-% mindestens eines Amids der allgemeinen Formel II 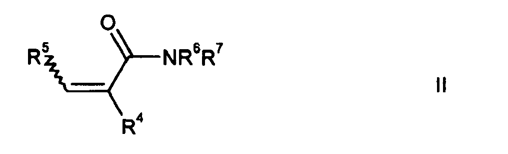 wobei die Variablen wie folgt gewählt werden:
      R¹, R², R⁴, R⁵ gewählt aus Wasserstoff, unverzweigtem oder verzweigtem C₁-C₁₀-Alkyl,
      R⁶, R⁷ gewählt aus Wasserstoff, unverzweigtem oder verzweigtem C₁-C₁₀.
      Alkyl, oder R⁶ und R⁷ sind gemeinsam C₂-C₁₀-Alkylen,
      R³ gewählt aus unverzweigtem oder verzweigtem C₁-C₁₀-Alkyl,
(b) mindestens einem Polysiloxan,
(c) mindestens einem festen Material auf Basis von Siliziumdioxid,
(d) und Wasser.

Weiterhin betrifft die vorliegende Erfindung eine Formulierung, die geeignet ist zur Durchführung des erfindungsgemäßen Verfahrens, sowie behandeltes Textil, erhältlich nach dem erfindungsgemäßen Verfahren.

Textile Materialien, insbesondere Garne, behandelt man vor dem Verarbeiten mit Lösungen, Dispersionen oder Schmelzen von makromolekularen Stoffen. Die auf die Faser aufgebrachten makromolekularen Stoffe kann man nach der Verarbeitung auswaschen. Wenn man eine derartige Behandlung durchführt, um vor dem Verweben eine höhere Glätte, Geschrneidigkeit, Festigkeit und Geschlossenheit zu erzielen, so spricht man vom Schlichten von Garnen. Schlichtemittel, auch Schlichten genannt, werden üblicherweise nach dem Weben möglichst weitgehend ausgewaschen, der letztere Arbeitsgang wird auch Entschlichten genannt.

Gängige Schlichtemittel wählt man üblicherweise aus natürlichen makromolekularen Stoffen wie beispielsweise Stärke, aus modifizierten natürlichen makromolekularen Stoffen wie beispielsweise modifizierter Stärke und Carboxymethylcellulose und aus synthetischen makromolekularen Stoffen wie beispielsweise Polyvinylalkohol, Polyestern und Poly(meth)acrylaten, s. beispielsweise Ullmann's Encyclopedia of Industrial Chemistry, Vol. 36, 6. Auflage, S. 18-26. Wiley-VCH Weinheim, 2003. Zahlreiche Stärkeformulierungen weisen jedoch schlechte Laufeigenschaften auf.

Für Schlichten, aber auch für andere Anwendungen auf Textil, sind daher Behandlungsverfahren erwünscht, durch die Textil mit makromolekularen Stoffen behandelt werden, damit das behandelte Textil sehr gute mechanische Eigenschaften aufweist. Außerdem sollen die aufgebrachten makromolekularen Stoffe gut mit wässrigen Flotten entfernt werden können.

Bei zahlreichen aus dem Stand der Technik bekannten Behandlungsmitteln und insbesondere bei Schlichtemitteln wird beobachtet, dass sie bei der Applikation zu starkem Schäumen neigen. Daraus resultiert eine inhomogene Applikation, was bei Schlichtemitteln dazu führen kann, dass die gewünschte Verbesserung der mechanischen Eigenschaften des behandelten Textils nicht in ausreichendem Maße eintritt. Versuche, das beobachtete Schäumen durch die Zugabe eines Entschäumers, beispielsweise auf Basis von Silikonen, zu dämpfen, haben sich als wenig erfolgreich erwiesen. Zwar beobachtete man in vielen Fällen eine Abnahme der Schaumbildung, jedoch bilden sich auf dem behandelten Textil ölige Flecken, die sich auf Walzen ablagern können und zur Klumpenbiledung führen. Reste der beobachteten öligen Flecken können außerdem beim Waschen nicht oder nur unvollkommen entfernt werden. Insbesondere bei der Kombination von Entschäumern auf Basis von Silikonen mit synthetischen makromolekularen Stoffen auf Basis von Poly(meth)acrylaten beobachtet man weiterhin, dass die Mischungen eine nur unbefriedigende Lagerstabilität aufweisen.

Demgemäß wurde das eingangs definierte Verfahren gefunden.

Unter Textil werden im Rahmen der vorliegenden Erfindung linienförmige Gebilde wie Textilfasern, Stapelfasern, Bindfäden, Fäden, Vorgame, Garne, Leinen, Schnüre, Seile, Zwirne verstanden. Textil kann natürlichen Ursprungs sein, beispielsweise Seide, Wolle, Flachs, Rami, Hanf oder Kokos oder insbesondere Baumwolle, oder synthetisch, beispielsweise regenerierte Cellulose wie z.B. Kupferseide, Viskose, oder Celluloseacetate wie Acetat und Triacetat, weiterhin Polyamid, Polyacrylnitril, Polypropylen und Polyester. Auch Mischungen kommen in Frage, beispielsweise Baumwolle-Polyester-Mischungen. Textil im Rahmen der vorliegenden Erfindung kann als Stapelfaser vorliegen, in Form von Filamenten oder als Stapelfasergarn.

Textil, welches man nach dem erfindungsgemäßen Verfahren behandelt, kann von beliebiger Farbe sein, und es kann ein- oder mehrfarbig sein. Bevorzugt behandelt man ungefärbtes Textil nach dem erfindungsgemäßen Verfahren.

In einer bevorzugten Ausführungsform der vorliegenden Erfindung handelt es sich bei Textil um
- Kettgarne aus Cellulosefasern, Polyester-Cellulosefaser-Mischungen, Wolle, Polyester-Wolle-Mischungen, Viskose-Filament oder Acetat-Filament oder
- Kettgarne aus glattem oder texturiertem Polyester-Filament.

Erfindungsgemäß behandelt man Textil mit
(a) mindestens einem Alkalimetall- oder Ammoniumsalz eines Copolymerisats, das wie oben beschrieben erhältlich ist,
(b) mindestens einem Polysiloxan,
(c) mindestens einem festen Material auf Basis von Siliziumdioxid,
(d) und Wasser.

In einer Ausführungsform der vorliegenden Erfindung führt man die erfindungsgemäße Behandlung in Gegenwart von
(e) mindestens einem Schutzkolloid
durch.

(a), (b), (c), (d) und (e) werden im Folgenden auch als Komponente (a), Komponente (b) usw. bezeichnet.

Unter Alkalimetallsalzen sind Salze von Lithium, Natrium, Kalium, Rubidium oder Cäsium und insbesondere von Kalium und Natrium zu verstehen. Unter Ammoniumsalze sind beispielsweise NH₄⁺-Salze zu verstehen, aber auch (NR⁸R⁹R¹⁰R¹¹)⁺-Salze, wobei R⁸ bis R¹¹ gleich oder verschieden sein können und gewählt werden aus Wasserstoff, C₁-C₁₀-Alkyl, C₆-C₁₄-Aryl, C₃-C₁₂-Cycloalkyl, Benzyl oder Hydroxy-C₂-C₁₀-Alkylen, insbesondere -CH₂CH₂-OH,
mit der Maßgabe, dass mindestens ein R⁸ bis R¹¹ von Wasserstoff verschieden ist.

Unter Alkalimetallsalzen bzw. Ammoniumsalzen von Copolymerisaten sind solche Salze von Copolymerisaten zu verstehen, bei denen im Mittel mindestens eine, bevorzugt mindestens zwei saure Gruppen pro Molekül des entsprechenden Copolymerisats mit Alkalimetall bzw. Ammonium neutralisiert sind. In einer speziellen Ausführungsform der vorliegenden Erfindung handelt es sich bei (a) um vollständig mit Alkalimetall bzw. Ammonium neutralisiertes Copolymerisat.

Erfindungsgemäß als Komponente (a) eingesetzte Alkalimetall- oder Ammoniumsalze von Copolymerisaten sind vorzugsweise Alkalimetall- oder Ammoniumsalze von Carboxylgruppenhaltige Copolymere, man kann aber auch Alkali- oder Ammoniumsalze von beispielsweise alkoholische Hydroxylgruppen enthaltenden Copolymeren oder von Sulfonaten einsetzen.

Erfindungsgemäß handelt es sich bei (a) um ein Alkalimetall- oder Ammoniumsalz von mindestens einem Copolymerisat, welches erhältlich ist durch Copolymerisation von
(a1) 1 bis 20 Gew.-%, bevorzugt 5 bis 15 Gew.-% (Meth)acrylsäure,
(a2) 2 bis 20 Gew.-%, bevorzugt 10 bis 20 Gew.-% (Meth)acrylnitril und
(a3) 30 bis 80 Gew.-%, bevorzugt 40 bis 60 Gew.-% mindestens eines Comonomers der allgemeinen Formel I 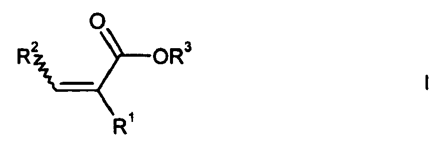
(a4) 0 bis 20 Gew.-%, bevorzugt bis 10 Gew.-% mindestens eines Comonomers der allgemeinen Formel II 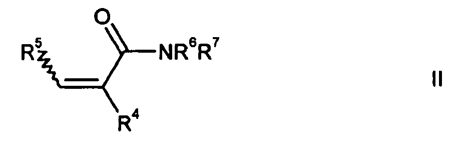 wobei die Variablen wie folgt gewählt werden:
   R¹, R², R⁴, R⁵ gleich oder verschieden und gewählt aus
      - Wasserstoff,
      - C₁-C₁₀-Alkyl, unverzweigt oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl und ganz besonders bevorzugt Methyl.
   R⁶, R⁷ gleich oder verschieden und gewählt aus
      - Wasserstoff,
      - C₁-C₁₀-Alkyl, unverzweigt oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl,
      - oder R⁶ und R⁷ sind gemeinsam C₂-C₁₀-Alkylen, substituiert oder unsubstituiert, insbesondere C₄-C₆-Alkylen, insbesondere -(CH₂)₄-, -(CH₂)₅- oder -(CH₂)₆-.
   R³ ist gewählt aus C₁-C₁₀-Alkyl, unverzweigt oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert-Butyl.

Bevorzugt sind R² und R⁵ jeweils Wasserstoff.

In einer Ausführungsform der vorliegenden Erfindung sind R¹ und R⁴ jeweils gewählt aus Wasserstoff und Methyl.

In einer bevorzugten Ausführungsform der vorliegenden Erfindung sind R¹ und R⁴ jeweils gewählt aus Wasserstoff und Methyl, und R² und R⁵ bedeuten jeweils Wasserstoff.

In einer Ausführungsform der vorliegenden Erfindung wählt man mindestens zwei verschiedene Comonomere (a3).

In einer bevorzugten Ausführungsform der vorliegenden Erfindung wählt man (a3) aus Acrylsäuremethylester, Methacrylsäuremethylester, Acrylsäureethylester, Methacrylsäureethylester, Acrylsäure-n-butylester, Methacrylsäure-n-butylester und Mischungen der vorstehend genannten Comonomere.

Die Werte in Gew.-% beziehen sich dabei jeweils auf die Masse des oder der betreffenden Comonomere in erfindungsgemäß eingesetztem Copolymerisat (a) als Alkalimetall- bzw. Ammoniumsalz.

Erfindungsgemäß als Komponente (a) eingesetzte Alkalimetall- bzw. Ammoniumsalze eingesetzte Copolymerisate können in Form von Blockcopolymerisaten, alternierenden Copolymerisaten oder vorzugsweise als statistische Copolymerisate vorliegen.

Erfindungsgemäß als Komponente (a) eingesetzte Copolymerisate bzw. ihre Alkali- oder Ammoniumsalze kann man nach an sich bekannten Methoden herstellen, insbesondere radikalischer Copolymerisation, absatzweise oder kontinuierlich, beispielsweise Massepolymerisation, Emulsionspolymerisation, Fällungspolymerisation und Lösungspolymerisation, beispielsweise in Wasser als Lösungsmittel.

In einer Ausführungsform der vorliegenden Erfindung weist mindestens ein Alkalimetall- bzw. Ammoniumsalz eines Copolymerisats (a) eine dynamische Viskosität im Bereich von 30 bis 1500 mPa·s auf, bevorzugt bis 800 und besonders bevorzugt 40 bis 300 mPa·s, gemessen als 25 Gew.-% wässrige Lösung nach DIN EN ISO 3219 bei 23 °C.

Erfindungsgemäß als Komponente (b) setzt man mindestens ein Polysiloxan im erfindungsgemäßen Verfahren ein. Bei erfindungsgemäß eingesetzten Polysiloxanen kann es sich um lineare, verzweigte oder cyclische Polysiloxane handeln oder Mischungen der vorstehend genannten. Erfindungsgemäß eingesetzte Polysiloxane haben O-Si-O-Ketten. Die freien Valenzen am Si können beispielsweise durch OH, C₁-C₁₀-Alkyl oder durch Phenyl abgesättigt sein, wobei Phenyl und insbesondere Methyl bevorzugt sind. Erfindungsgemäß als Komponente (b) eingesetzte Polysiloxane sind an sich bekannt.

In einer Ausführungsform der vorliegenden Erfindung weist mindestens ein Polysiloxan (b) eine dynamische Viskosität im Bereich von 100 bis 2000 mPa·s auf, bevorzugt bis 500 und besonders bevorzugt bis 200 mPa·s, gemessen nach DIN EN ISO 3219 bei 23 °C.

Bei festem Material auf Basis von Siliziumdioxid (c) erfindungsgemäß als Komponente (c) eingesetztem Material handelt es sich beispielsweise um Kieselgel. Dabei kann erfindungsgemäß eingesetztes Kieselgel auch Anteile anderer Elemente enthalten, beispielsweise Aluminium oder Natrium oder Calcium oder Mischungen der vorstehend genannten Elemente.

Unter festem Material soll solches Material verstanden werden, welches bei Zimmertemperatur fest ist.

Festes Material auf Basis von Siliziumdioxid (c) liegt im Rahmen der vorliegenden Erfindung in Form von Partikeln vor, die reguläre oder vorzugsweise sphärische Form aufweisen können. Der mittlere Durchmesser der Partikel (Zahlenmittel, bestimmt beispielsweise durch mikroskopische Methoden oder durch Coutter Counter) kann im Bereich von 0,1 nm bis 1 µm liegen.

In einer Ausführungsform der vorliegenden Erfindung verwendet man solche festen Materialien auf Basis von Siliziumdioxid (c), die einen mittleren Durchmesser (Zahlenmittel) im Bereich von 0,1 nm bis 100 µm, bevorzugt 5 nm bis 50 µm aufweisen.

Feste Materialen auf Basis von Siliziumdioxid (c) sind als solche bekannt und können nach dem Fachmann bekannten Methoden hergestellt werden, beispielsweise durch Fällung durch Ansäuern von wässrigen Lösungen von Natriummetasilikat.

In einer Ausführungsform der vorliegenden Erfindung haben feste Materialien auf Basis von Siliziumdioxid eine innere Oberfläche nach BET, bestimmt beispielsweise durch Stickstoffadsorption gemäß DIN 66131, im Bereich von 50 bis 5000 m²/g, bevorzugt 250 bis 3000 m²/g und besonders bevorzugt 350 bis 1000 m²/g.

In einer bevorzugten Ausführungsform der vorliegenden Erfindung verwendet man solche festen Materialien auf Basis von Siliziumdioxid (c), die in Form von Agglomeraten sogenannter Primärpartikel vorliegen. Dazu setzt man solche festen Materialien auf Basis von Siliziumdioxid (c) ein, bei denen die Primärpartikel einen mittleren Durchmesser (Zahlenmittel) im Bereich von 0,1 bis 100 nm, bevorzugt 5 bis 50 nm aufweisen. Der mittlere Durchmesser (Zahlenmittel) von Agglomeraten kann im Bereich von 60 nm bis 100 µm liegen, bevorzugt im Bereich von 100 nm bis 50 µm. Agglomerate von Primärpartikeln haben im Allgemeinen eine im wesentlichen sphärische Gestalt und können aus 4 Primärpartikeln bis zu mehr als tausend Primärpartikeln bestehen.

In einer Ausführungsform der vorliegenden Erfindung setzt man als festes Material auf Basis von Siliziumdioxid (c) mindestens ein pyrogenes Kieselgel ein, das im Rahmen der vorliegenden Erfindung auch als pyrogene Kieselsäure bezeichnet wird. Pyrogene Kieselgele sind beispielsweise als Aerosil-Marken der Firma Degussa im Handel erhältlich. Besonders bevorzugt setzt man pyrogene Kieselsäuren ein, die in form von Agglomeraten von Primärpartikeln vorliegen und die eine mittlere Oberfläche im Bereich von 50 bis 5000 m²/g, bevorzugt 250 bis 3000 m²/g und besonders bevorzugt 350 bis 2000 m²/g aufweisen.

Das erfindungsgemäße Verfahren wird unter Verwendung von Wasser (d) durchgeführt, wobei das eingesetzte Wasser deionisiert (entsalzt) sein kann, aber nicht muss. Die Verwendung von deionisiertem Wasser oder von Wasser mit bis zu 2° dH (Deutscher Härte) ist bevorzugt. Deionisiertes (entsalztes oder auch vollentsalztes) Wasser lässt sich nach Methoden gewinnen, die dem Fachmann bekannt sind, beispielsweise der Umkehrosmose oder unter Verwendung von lonenaustauschern.

In einer speziellen Ausführungsform der vorliegenden Erfindung kann man die erfindungsgemäße Behandlung in Gegenwart von mindestens einem Schutzkolloid (e) durchführen, wobei als Schutzkolloid (e) oberflächenaktive Verbindungen in Frage kommen, die anionisch, kationisch, zwitterionisch oder nichtionisch sein können.

Besonders bevorzugte Schutzkolloide (e) sind Polymere der (Meth)acrylsäure und Copolymere aus Acrylsäure und Methacrylsäure, die jeweils vollständig oder partiell durch Alkalimetall oder Ammonium neutralisiert sein können, wobei Alkalimetall und Ammonium wie oben stehend definiert sind.

In einer Ausführungsform der vorliegenden Erfindung handelt es sich bei Polymeren oder Copolymeren der (Meth)acrylsäure um solche, die als 28,5 Gew.-% wässrige Lösung eine dynamische Viskosität im Bereich von 2500 bis 5000 mPa·s aufweisen, gemessen nach DIN EN ISO 3219.

Geeignete nicht-ionische Schutzkolloide (e), die vorzugsweise in Gegenwart mindestens eines Polymers oder Copolymers der (Meth)acrylsäure eingesetzt werden können, sind schwachschäumende, nicht ionische Tenside, vorzugsweise alkoxylierte C₁₂-C₁₅-Oxoalkohole, die mit 1 bis 3 Äquivalenten Alkylenoxid alkoxyliert sind, vorzugsweise mit Ethylenoxid oder Propylenoxid.

Man arbeitet zur Durchführung des erfindungsgemäßen Verfahrens vorzugsweise mit Verhältnissen von etwa 2 bis 15 Gew.-% Flotte zu Textil. Wünscht man das erfindungsgemäße Verfahren als Verfahren zum Schlichten von Textil zu gestatten, so arbeitet man vorzugsweise mit Schlichteauflagen von 2 bis 15%. Unter Schlichteauflagen wird im Rahmen der vorliegenden Erfindung das Verhältnis von Schlichte zu Kettgam verstanden.

In einer Ausführungsform der vorliegenden Erfindung setzt man die Komponenten in folgenden Mengen ein:
1 bis 30 Gew.-%, bevorzugt 10 bis 25 Gew.-%, an (a), bezogen auf die Gesamtmenge an wässriger Flotte bzw. wässrigen Flotten,
0,001 bis 5 Gew.-%, bevorzugt 0,01 bis 4 Gew.-%, an (b),
0,0001 bis 5 Gew.-%, bevorzugt 0,001 bis 4 Gew.-%, an (c),
0 bis 3 Gew.-%, bevorzugt 0,0001 bis 2 Gew.-%, an (e),
wobei die Gew.-% von (b), (c) und (e) jeweils auf (a) bezogen sind.

In einer Ausführungsform des erfindungsgemäßen Verfahrens geht man so vor, dass man Textil mit einer wässrigen Flotte, enthaltend
(a) mindestens ein Alkalimetall- oder Ammoniumsalz eines Copolymerisats, das wie vorstehend beschrieben erhältlich ist,
(b) mindestens ein Polysiloxan und
(c) mindestens ein festes Material auf Basis von Siliziumdioxid und gegebenenfalls
(e) mindestens ein Schutzkolloid
behandelt.

In einer Ausführungsform der vorliegenden Erfindung arbeitet man zur Ausführung des erfindungsgemäßen Verfahrens bei einer Temperatur im Bereich von 10°C bis 35°C, bevorzugt von 20 bis 30°C.

In einer Ausführungsform der vorliegenden Erfindung geht man zur Durchführung des erfindungsgemäßen Verfahrens so vor, dass man Textil, insbesondere in Form von linienförmigen Gebilden, über eine oder mehrere Rollen durch mehrere oder vorzugsweise einen Behälter zieht, der oder die eine oder mehrere wässrige Flotten enthält bzw. enthalten, welche (a), (b), (c) und gegebenenfalls (e) enthalten. Anschließend kann man überschüssige wässrige Feuchtigkeit abquetschen. Anschließend kann man erfindungsgemäß behandeltes Textil trocknen, beispielsweise indem man es durch eine Trocknungseinheit zieht. Geeignete Trocknungseinheiten sind beispielsweise Zylindertrockner. Man trocknet beispielsweise bei Temperaturen im Bereich von 90 bis 130°C.

Wünscht man erfindungsgemäß Textil mit mehreren wässrigen Flotten zu behandeln, so kann man so vorgehen, dass man (a), (b), (c) und gegebenenfalls (d) auf verschiedene wässrige Flotten verteilt.

In einer besonders bevorzugten Ausführungsform behandelt man Textil erfindungsgemäß so, dass man (a), (b), (c) und gegebenenfalls (e) jeder oder besonders bevorzugt der wässrigen Flotte zusetzt.

Die Behandlungsdauer von Textil mit (a),(b),(c) sowie gegebenenfalls (e) ist üblicherweise kurz und hängt ab von der Geschwindigkeit, mit der man das zu behandelnde Textil durch den oder die Behälter zieht, in denen oder in dem sich eine oder mehrere Flotten befinden, enthaltend (a), (b), (c), Wasser und gegebenenfalls (e). Typische Maschinengeschwindigkeiten liegen im Bereich von 5 bis 300 m/min. Wenn man mit Maschinen arbeitet, die nur einen einzelnen Faden durch einen oder mehrere Behälter zieht, in denen oder in dem sich eine oder mehrere Flotten befinden, enthaltend (a), (b), (c), Wasser und gegebenenfalls (e), so sind Maschinengeschwindigkeiten bis zu 500 m/min möglich

Wässrige Flotten zur Durchführung des erfindungsgemäßen Verfahrens kann man herstellen, indem man die gewünschten Komponenten mit Wasser vermischt.

Zusätzlich zu den oben beschriebenen erfindungsgemäßen Maßnahmen kann man Textil zusätzlich noch mit Wachsen, beispielsweise Polyolefinwachs, beispielsweise Polyethylenwachs oder Polypropylenwachs sowie Copolymerwachsen von Ethylen und Proyplen, weiterhin oxidiertem Polyethylenwachs und insbesondere Polyethylenoxidwachs, behandeln. Besonders bevorzugt behandelt man mit Polyethylenoxidwachs, welches im Mittel (Gewichtsmittel) im Bereich von 20 bis 250 Ethylenoxid-Einheiten pro Molekül aufweist.

Zusätzlich zu den oben beschriebenen erfindungsgemäßen Maßnahmen kann man Textil weiterhin noch mit sulfiertem Talg oder sulfiertem Öl behandeln.

Ein weiterer Gegenstand der vorliegenden Erfindung sind wässrige Formulierungen, enthaltend
(a) mindestens ein Alkalimetall- oder Ammoniumsalz eines Copolymerisats, welches erhältlich ist durch Copolymerisation von
   (a1) 1 bis 20 Gew.-% (Meth)acrylsäure,
   (a2) 2 bis 20 Gew.-% (Meth)acrylnitril,
   (a3) 30 bis 80 Gew.-% mindestens eines Comonomers der allgemeinen Formel I 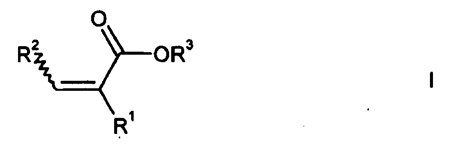
   (a4) 0 bis 20 Gew.-% mindestens eines Amids der allgemeinen Formel II 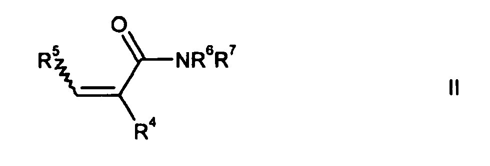 wobei die Variablen wie folgt gewählt werden:
      R¹, R², R⁴, R⁵ gewählt aus Wasserstoff, unverzweigtem oder verzweigtem C₁-C₁₀-Alkyl,
      R⁶, R⁷ gewählt aus Wasserstoff, unverzweigtem oder verzweigtem C₁-C₁₀-Alkyl, oder R⁶ und R⁷ sind gemeinsam C₂-C₁₀-Alkylen,
      R³ gewählt aus unverzweigtem oder verzweigtem C₁-C₁₀-Alkyl,
   (b) mindestens ein Polysiloxan und
   (c) mindestens ein festes Material auf Basis von Siliziumdioxid,
   wobei die Komponenten (a), (b) und (c) wie oben stehend definiert sind.

Ein weiterer Gegenstand der vorliegenden Erfindung sind vorstehend genannte wässrige Formulierungen, die weiterhin
(e) mindestens ein Schutzkolloid
enthalten, wobei Komponente (e) wie oben stehend definiert ist.

Erfindungsgemäße wässrige Formulierungen eignen sich besonders gut, um das eingangs definierte erfindungsgemäße Verfahren auszuüben.

Bei (a) handelt es sich um ein Alkalimetall- oder Ammoniumsalz eines Copolymerisats, welches erhältlich ist durch Copolymerisation von
(a1) 1 bis 20 Gew.-% (Meth)acrylsäure,
(a2) 2 bis 20 Gew.-% (Meth)acrylnitril,
(a3) 30 bis 80 Gew.-% mindestens eines Comonomers der allgemeinen Formel I 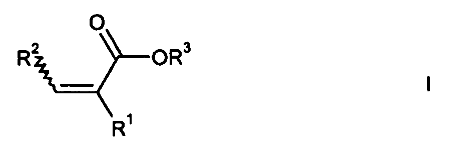
(a4) 0 bis 20 Gew.-% mindestens eines Amids der allgemeinen Formel **II** 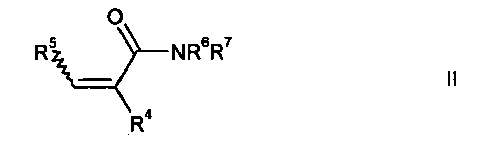 wobei die Variablen wie folgt gewählt werden:
   R¹, R², R⁴, R⁵ gewählt aus Wasserstoff, unverzweigtem oder verzweigtem C₁-C₁₀-Alkyl,
   R⁶, R⁷ gewählt aus Wasserstoff, unverzweigtem oder verzweigtem C₁-C₁₀-Alkyl, oder
   R⁶ und R⁷ sind gemeinsam C₂-C₁₀-Alkylen,
   R³ gewählt aus unverzweigtem oder verzweigtem C₁-C₁₀-Alkyl.

In einer Ausführungsform der vorliegenden Erfindung weist mindestens ein Alkalimetall- bzw. Ammoniumsalz eines Copolymerisats (a) eine dynamische Viskosität im Bereich von 30 bis 1500 mPa·s auf, bevorzugt bis 800 und besonders bevorzugt 40 bis 300 mPa·s auf, gemessen als 25 Gew.-% wässrige Lösung nach DIN EN ISO 3219 bei 23 °C.

In einer Ausführungsform der vorliegenden Erfindung handelt es sich bei mindestens einem festen Material auf Basis von Siliziumdioxid (c) um ein pyrogenes Kieselgel.

In einer Ausführungsform der vorliegenden Erfindung weist mindestens ein Polysiloxan (b) eine dynamische Viskosität im Bereich von 100 bis 2000 mPa·s auf, bevorzugt bis 500 und besonders bevorzugt bis 200 mPa·s auf, gemessen als 25 Gew.-% wässrige Lösung nach DIN EN ISO 3219 bei 23 °C.

In einer Ausführungsform der vorliegenden Erfindung enthalten erfindungsgemäße wässrige Formulierungen
2 bis 80 Gew.-%, bevorzugt 2,5 bis 50, besonders bevorzugt bis 25 Gew.-%, an (a), bezogen auf das Gesamtgewicht an erfindungsgemäßer wässriger Formulierung
0,001 bis 5 Gew.-%, bevorzugt 0,01 bis 4 Gew.-%, an (b),
0,0001 bis 5 Gew.-%, bevorzugt 0,001 bis 4 Gew.-%, an (c),
0 bis 3 Gew.-%, bevorzugt 0,0001 bis 2 Gew.-%, an (e),
wobei Gew.-% (b), (c) und (e) jeweils auf (a) bezogen sind.

Das oben beschriebene erfindungsgemäße Verfahren zur Behandlung kann man beispielsweise so ausüben, dass man erfindungsgemäße wässrige Formulierung mit weiterem Wasser verdünnt und dann als wässrige Flotte einsetzt.

Erfindungsgemäße wässrige Formulierungen kann man beispielsweise durch Vermischen der Komponenten (a), (b) und (c) mit Wasser und gegebenenfalls (e) herstellen, wobei die Reihenfolge der Zugabe der Komponenten (a) bis (c) und gegebenenfalls (e) unkritisch ist.

Erfindungsgemäße wässrige Formulierungen zeichnen sich durch gute Lagerstabilität aus.

Ein weiterer Gegenstand der vorliegenden Erfindung ist die Verwendung von erfindungsgemäßen wässrigen Formulierungen zur Behandlung von Textil. Ein weiterer Gegenstand der vorliegenden Erfindung ist ein Verfahren zur Behandlung von Textil unter Verwendung von erfindungsgemäßen wässrigen Formulierungen.

Ein weiterer Gegenstand der vorliegenden Erfindung ist Textil, erhältlich nach dem erfindungsgemäßen Verfahren. Es lässt sich vorzüglich weiterverarbeiten und weist wenig ölige Flecken auf.

Die Erfindung wird durch Arbeitsbeispiele erläutert.

Allgemeine Bemerkungen:
Mengenangaben in g/l beziehen sich jeweils auf g/l Flotte.
Viskositätsbestimmungen wurden jeweils mit einer Brookfield Spindel 2 bei 100 Umdrehungen/Minute bei 23°C in Anlehnung an DIN EN ISO 3219 durchgeführt.

### 1. Herstellung von wässrigen Lösungen von Alkalimetallsalzen und Ammoniumsalzen von Copolymerisaten

### 1.1. Herstellung einer wässrigen Lösung von Natriumsalz von Copolymerisat A1

### Zulauf 1:

In einem Rührbehälter vermischte man miteinander:
2,88 t vollentsalztes Wasser
256 kg einer 15 Gew.-% wässrigen Lösung von Natriumbenzolsulfonat
183 kg n-C₁₈H₃₇-(O-CH₂-CH₂)₁₈-OH
439 kg frisch destillierte Methacrylsäure
1,83 t Acrylsäure-n-butylester
1,025 t Acrylsäuremethylester
14,6 kg einer 25 Gew.-% wässrigen Natronlauge.

### Zulauf 2:

In einem Rührbehälter vermischte man miteinander:
428 l vollentsalztes Wasser und
11 kg Na₂S₂O₈ (Natriumperoxodisulfat).

### Zulauf 3: 365 kg frisch destilliertes Acrylnitril.

In einem weiteren Rührbehälter wurden 4,18 t vollentsalztes Wasser und 316 kg 25 Gew.-% wässrige Natronlauge miteinander vermischt und auf 65°C erwärmt (Zulauf 4). In einem Fass (Fass 1) vermischt man: 195 l vollentsalztes Wasser, 14,3 kg Aceton und 23,6 kg Na₂S₂O₅ (Natriumdisulfit). In einem weiteren Fass (Fass 2) vermischte man: 105 l vollentsalztes Wasser und 23 kg tert.-Butylhydroperoxid.

In einem 20-m³-Rührkessel mit Heizvorrichtung, Kühler, Rührer und 3 Zulauföffnungen wurden 2,4 t vollentsalztes Wasser, und 12,2 kg einer 15 Gew.-% wässrigen Lösung von Natriumbenzolsulfonat vorgelegt, entgast und unter Stickstoff miteinander vermischt. Anschließend wurde die so erhaltenen Mischung auf 80°C erwärmt.

Man gab 166 kg Zulauf 1, 110 kg Zulauf 2 und 9 kg Zulauf 3 zu der so erhaltenen erwärmten Mischung. Die Polymerisation startete. Danach wurden die Reste von Zulauf 1, Zulauf 2 und Zulauf 3 über einen Zeitraum von 3 Stunden simultan zugegeben. Man rührte nach beendeter Zugabe eine Stunde bei 80 °C. Danach wurde Zulauf 4 über einen Zeitraum von zwei Stunden zugegeben und nach beendeter Zugabe weitere zwei Stunden bei 80 °C gerührt.
Anschließend wurde der Inhalt aus Fass 1 und Fass 2 zugegeben und durch Abschalten der Heizung auf 34 °C abgekühlt.

Man erhielt eine wässrige Lösung von Copolymerisat A1 als Natriumsalz. Der Feststoffgehalt betrug 25%. Die dynamische Viskosität, bestimmt nach DIN EN ISO 3219, betrug 100 mPa·s.

### 1.2. Herstellung einer wässrigen Lösung von Natrium/Ammonium-Mischsalz von Copolymerisat A2

Es wurde vorgegangen wie unter 1.1 beschrieben, jedoch wurden die Zuläufe 1, 3 und 4 modifiziert hergestellt.
Zulauf 1 wurde wie folgt hergestellt: In einem Rührbehälter vermischte man miteinander:
   2,88 t vollentsalztes Wasser
   256 kg einer 15 Gew.-% wässrigen Lösung von Natriumbenzolsulfonat
   183 kg n-C₁₈H₃₇-(O-CH₂-CH₂)₁₈-OH
   209 kg frisch destillierte Methacrylsäure
   644 kg Acrylsäureethylester
   2075 kg Acrylsäuremethylester
   14,6 kg einer 25 Gew.-% wässrigen Natronlauge.
Zulauf 3: 622 kg frisch destilliertes Acrylnitril.
Zulauf 4: 4,18 t vollentsalztes Wasser und 316 kg 25 Gew.-% wässrigeAmmoniakläsung wurden miteinander vermischt und auf 65 °C erwärmt.

Man erhielt eine wässrige Lösung von Copolymerisat A2 als Natrium/Ammonium-Mischsalz. Der Feststoffgehalt betrug 25%. Die dynamische Viskosität, bestimmt nach DIN EN ISO 3219, betrug 110 mPa·s.

### 1.3. Herstellung einer wässrigen Lösung von Natriumsalz von Copolymerisat A1

Es wurde vorgegangen wie unter 1.2 beschrieben, jedoch wurde Zulauf 4 wie folgt hergestellt:
4,18 t vollentsalztes Wasser und 316 kg 25 Gew.-% wässrige Natronlauge wurden miteinander vermischt und auf 65 °C erwärmt

Man erhielt eine wässrige Lösung von Copolymerisat A3 als Natriumsalz. Der Feststoffgehalt betrug 25%. Die dynamische Viskosität, bestimmt nach DIN EN ISO 3219, betrug 80 mPa·s.

### 2. Herstellung von erfindungsgemäßen wässrigen Formulierungen Vorarbeiten:

Man vermischte in einem Rührkessel miteinander:
32 kg eines Polydimethylsiloxans mit einer dynamische Viskosität von 100 mPa·s
3 kg eines pyrogenen Kieselgels, BET-Oberfläche 800 m²/g, bestimmt nach
DIN 66131, Partikeldurchmesser (Zahlenmittel) 50 µm, bestimmt durch Coulter Counter.
20 kg einer Polyacrylsäure, partiell neutralisiert, pH-Wert: 7,0, dynamische Viskosität der 28,5 Gew.-% wässrigen Lösung 3000 mPa·s bei 28,5 °C
3 kg n-C₁₁H₂₃O(CH₂CH₂O)₃-H
80 I vollentsalztes Wasser.
Man erhielt Premix 1 als lagerstabile Emulsion.

### 2.1. Herstellung von erfindungsgemäßen wässrigen Formulierungen F 2.1 bis F 2.3

In einem Rührgefäß vermischte man Premix 1 und wässrige Lösung von Copolymerisat A1 als Natriumsalz bzw. Copolymerisat A2 als Natrium/Ammonium-Mischsalz bzw. Copolymerisat A3 als Natriumsalz gemäß Tabelle 1.

**Tabelle 1: Herstellung von erfindungsgemäßen Formulierungen**

| Nummer der Formulierung | A1 [kg] | A2 [kg] | A3 [kg] | Premix 1 [g] |
|---|---|---|---|---|
| F 2.1 | 1 | - | - | 2 |
| F 2.2 | - | 1 | - | 2 |
| F 2.3 | - | - | 1 | 3 |

Die erfindungsgemäßen Formulierungen F 2.1 bis F2.3 wiesen bei Zimmertemperatur und auch bei 50°C eine sehr gute Lagerstabilität auf; auch nach einem Monat Lagerung bei Zimmertemperatur bzw. 50°C ließen sich visuell bei keiner der untersuchten erfindungsgemäßen Formulierungen Unterschiede feststellen.

### 2.2. Bestimmung des Schaumverhattens von erfindungsgemäßen Formulierungen und von Copolymerisaten

Das Schaumverhalten wurde in Anlehnung an DIN 53 902 wie folgt bestimmt.
Die jeweils zu untersuchende Flotte (50 g/l wässrige Lösung von Copolymerisat oder 50 g/l erfindungsgemäße Formulierung) wurde auf 80°C erwärmt.
In einen Standzylinder, Volumen 1500 ml, Skalierung 10 ml, wurden 250 ml der auf 80°C erwärmten Flotte (50 g/l wässrige Lösung von Copolymerisat oder 50 g/l erfindungsgemäße Formulierung) gegeben. Zur Schaumerzeugung wurden mit einem Schlagstempel mit Lochscheibe (Durchmesser: 60 mm, 24 zentrische Bohrungen mit einem Durchmesser von je 3 mm) 20 Schläge innerhalb von 20 Sekunden bei einer konstanten Schlagfrequenz durchgeführt, wobei die Lochscheibe jeweils bis zur Oberkante des Schaums herausgezogen wurde. Nach beendeter Schaumerzeugung wurde sofort das Gesamtvolumen aus Flüssigkeit und Schaum erfasst und nach den vorgegebnen Standzeiten das jeweilige Schaumvolumen als Differenz von Gesamtvolumen und Flüssigkeitsvolumen (d.h. ohne den Schaum) bestimmt.

Die Ergebnisse sind in Tabelle 2 zusammengefasst.

**Tabelle 2: Untersuchung des Schaumverhaltens**

| Flotte enthält | [ml Schaum] unmittelbar nach Beendigung der Schaumerzeugung | [ml Schaum] nach 1 Minute | [ml Schaum] nach 5 Minuten |
|---|---|---|---|
| A1 | 650 | 480 | 250 |
| F 2.1 | 28 | 0 | 0 |
| F 2.1 * | 28 | 0 | 0 |
| A2 | 600 | 450 | 280 |
| F 2.2 | 25 | 5 | 0 |
| F2.2* | 28 | 8 | 0 |
| A3 | 750 | 510 | 310 |
| F 2.3 | 30 | 5 | 0 |
| F2.3* | 29 | 5 | 0 |

| | | | |
|---|---|---|---|
| Mit * markierte erfindungsgemäße Formulierungen beziehen sich auf die jeweilige erfindungsgemäße Formulierung nach einer Lagerzeit von 30 Tagen bei Zimmertemperatur. | | | |

### 3. Behandlung von Textil

### 3.1. Herstellung einer wässrigen Flotte zur Behandlung von Textil und einer Vergleichsflotte

Man stellte 64 kg erfindungsgemäße wässrige Formulierung F 2.2 nach der oben genannten Rezeptur her und verdünnte sie mit 136 l vollentsalztem Wasser. Man erhielt 200 I erfindungsgemäße wässrige Flotte FI-1. Dynamische Viskosität: 300 mPa·s.

Zur Herstellung einer Vergleichsflotte verrührte man 64 kg wässrige Lösung von Copolymerisat A2 als Natrium/Ammonium-Mischsalz mit 128 g Polydimethylsilikonentschäumer und verdünnte mit 136 I vollentsalztem Wasser. Man erhielt 200 I wässrige Vergleichsflotte Fl-V2. Dynamische Viskosität 30 mPa·s.

### 3.2 Versuchsparameter der Behandlung von Textil

Auf einer Schlichtemaschine des Typs BenSizeSingle der Fa. Benninger mit Heißluftzylindertrockner wurde Polyestergarn (Polyesterkettgam, Kettgam dtex: 78 f34 x1) behandelt. Man stellte die Schlichtemaschine wie folgt ein:
Fadenzahl: 10980, Roh/Rietbreite: 168 cm, Faden/cm: 76,3
Konzentration/Refraktion: 16°Brix
Flottentemperatur: 25°C
Behandlung: 1 x tauchen, 1 x abquetschen.
Mittlerer Quetschdruck:18 kN
Nassteilung: 3 x, keine Trockenteilung
Maschinengeschwindigkeit: 300 m/min
Trocknungsbedingungen: 2 x Lufttrocknung bei 150°C, 5 Walzen mit jeweils 145°C
Nachwachsen: bei 85°C mit Polyethylenoxidwachs, das (Gewichtmittel) etwa 110 Ethylenoxideinheiten/Molekül aufweist
Restfeuchtigkeit nach dem Trocknen: 0,4. Gew.-%
Ablauf/Einlauf: 40 cN
Wickeldruck: 18 cN/Faden, Anpressdruck: 200 N, kein Verzug
Flottenverbrauch 138 l/100 kg Polyestergarn, Gambeschwerung: 5 Gew.-%

Die jeweils behandelten Garne wurden als Kettgarne anschließend verwoben (10 Kettbaume mit jeweils 12.000 m)

### 3.3 Versuchsergebnisse von erfindungsgemäßer Behandlung von Textil und Vergleichsversuch

Man führte je eine Textilbehandlung unter den unter 3.2 genannten Bedingungen durch, einmal (erfindungsgemäß) mit wässriger Flotte FL-1 und einmal mit wässriger Vergleichsflotte FI-V2.

Beim Vergleichsversuch beobachtete man nach Behandlung von 1000 m Polyesterkettgam eine leichte Schaumbildung. Nach Behandlung von 2000 m Polyesterkettgarn baute sich Schaum auf. Selbst nach weiterer Zugabe von 0,3 g/l Polydimethylsilikonentschäumer (s.o.) blieb der Schaum erhalten. Nach Behandlung von 5000 m Polyesterkettgarn wurde an den Walzen in der Schlichtemaschine eine starke Belagsbildung beobachtet, die zum Abschalten und Säubern der Walzen zwang.
Nach Säubern der Walzen wurde der Versuch fortgesetzt, musste aber nach Behandlung von 10.000 m Polyesterkettgam erneut abgebrochen werden, und die Walzen wurden erneut von Belag befreit.

Bei erfindungsgemäßer Behandlung wurde nach Behandlung von 1000 m Polyesterkettgam eine geringe Schaumbildung beobachtet, jedoch baute sich danach kein Schaum auf. Eine Zugabe von Entschäumer war nicht notwendig. Die erfindungsgemäße Behandlung konnte störungsfrei fortgesetzt werden. Nach erfindungsgemäßer Behandlung von 10.000 m Polyesterkettgarn wurde die Behandlung. Auf den Walzen konnte kein Belag festgestellt werden.

Das erfindungsgemäß hergestellte Polyestergewebe zeigte keine fehlerhafte Rohware, und das Warenbild war einwandfrei. Nach dem Vergleichsverfahren erhaltenes Rohgewebe wies ein streifiges Warenbild auf.

## Patentansprüche

1. Verfahren zur Behandlung von Textil, **dadurch gekennzeichnet, dass** man es behandelt mit
(a) mindestens einem Alkalimetall- oder Ammoniumsalz eines Copolymerisats, welches erhältlich ist durch Copolymerisation von
(a1) 1 bis 20 Gew.-% (Meth)acrylsäure,
(a2) 2 bis 20 Gew.-% (Meth)acrylnitril,
(a3) 30 bis 80 Gew.-% mindestens eines Comonomers der allgemeinen Formel I 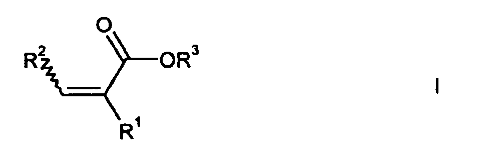
(a4) 0 bis 20 Gew.-% mindestens eines Amids der allgemeinen Formel **II** 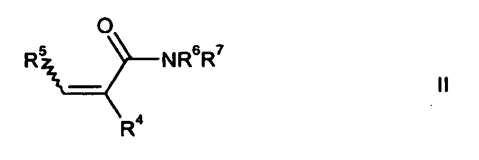 wobei die Variablen wie folgt gewählt werden:
R¹, R², R⁴, R⁵ gewählt aus Wasserstoff, unverzweigtem oder verzweigtem C₁-C₁₀-Alkyl,
R⁶, R⁷ gewählt aus Wasserstoff, unverzweigtem oder verzweigtem C₁-C₁₀-Alkyl, oder R⁶ und R⁷ sind gemeinsam C₂-C₁₀-Alkylen,
R³ gewählt aus unverzweigtem oder verzweigtem C₁-C₁₀-Alkyl,
(b) mindestens einem Polysiloxan,
(c) mindestens einem festen Material auf Basis von Siliziumdioxid,
(d) und Wasser.

2. Verfahren nach Anspruch 1, **dadurch gekennzeichnet, dass** man die Behandlung durchführt in Gegenwart von
(e) mindestens einem Schutzkolloid.

3. Verfahren nach Anspruch 1 oder 2, **dadurch gekennzeichnet, dass** mindestens ein Alkalimetall- oder Ammoniumsalz eines Copolymerisats (a) eine dynamische Viskosität im Bereich von 30 bis 1500 mPa·s aufweist.

4. Verfahren nach einem der Ansprüche 1 bis 3, **dadurch gekennzeichnet, dass** es sich bei mindestens einem festen Material auf Basis von Siliziumdioxid (c) um ein pyrogenes Kieselgel handelt.

5. Verfahren nach einem der Ansprüche 1 bis 4, **dadurch gekennzeichnet, dass** mindestens ein Polysiloxan (b) eine dynamische Viskosität im Bereich von 100 bis 2000 mPa·s aufweist.

6. Wässrige Formulierung, enthaltend
(a) mindestens ein Alkalimetall- oder Ammoniumsalz eines Copolymerisats, welches erhältlich ist durch Copolymerisation von
(a1) 1 bis 20 Gew.-% (Meth)acrylsäure,
(a2) 2 bis 20 Gew.-% (Meth)acrylnitril,
(a3) 30 bis 80 Gew.-% mindestens eines Comonomers der allgemeinen Formel I 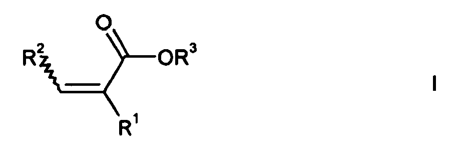
(a4) 0 bis 20 Gew.-% mindestens eines Amids der allgemeinen Formel II 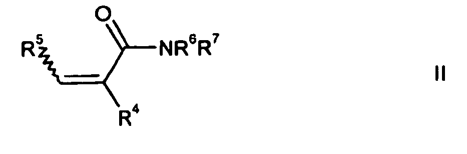 wobei die Variablen wie folgt gewählt werden:
R¹, R², R⁴, R⁵ gewählt aus Wasserstoff, unverzweigtem oder verzweigtem C₁-C₁₀-Alkyl,
R⁶, R⁷ gewählt aus Wasserstoff, unverzweigtem oder verzweigtem C₁-C₁₀-Alkyl, oder R⁶ und R⁷ sind gemeinsam C₂-C₁₀-Alkylen,
R³ gewählt aus unverzweigtem oder verzweigtem C₁-C₁₀-Alkyl,
(b) mindestens ein Polysiloxan,
(c) mindestens ein festes Material auf Basis von Siliziumdioxid.

7. Formulierung nach Anspruch 6, **dadurch gekennzeichnet, dass** sie zusätzlich
(e) mindestens ein Schutzkolloid
enthält.

8. Formulierung nach Anspruch 6 oder 7, **dadurch gekennzeichnet, dass dadurch gekennzeichnet, dass** mindestens ein Alkalimetall- oder Ammoniumsalz eines Copolymerisats (a) eine dynamische Viskosität im Bereich von 40 bis 800 mPa·s aufweist.

9. Formulierung nach einem der Ansprüche 6 bis 8, **dadurch gekennzeichnet, dass** es sich bei mindestens einem festen Material auf Basis von Siliziumdioxid (c) um ein pyrogenes Kieselgel handelt.

10. Formulierung nach einem der Ansprüche 6 bis 9, **dadurch gekennzeichnet, dass** mindestens ein Polysiloxan (b) eine dynamische Viskosität im Bereich von 100 bis 200 mPa·s aufweist.

11. Verwendung von Formulierungen nach einem der Ansprüche 6 bis 10 zur Behandlung von Textil.

12. Verfahren zur Behandlung von Textil unter Verwendung von Formulierungen nach einem der Ansprüche 6 bis 10.

## Claims

1. A process for treating a textile, which comprises treating said textile with
(a) at least one alkali metal or ammonium salt of a copolymer obtainable by copolymerization of
(a1) from 1% to 20% by weight of (meth)acrylic acid,
(a2) from 2% to 20% by weight of (meth)acrylonitrile,
(a3) from 30% to 80% by weight of at least one comonomer of the general formula I 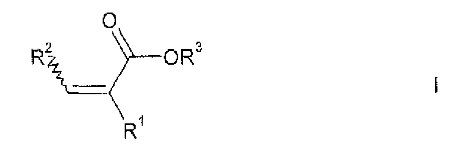
(a4) from 0% to 20% by weight of at least one amide of the general formula II 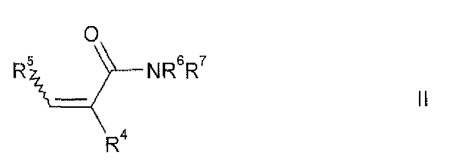 where
R¹, R², R⁴ and R⁵ are each selected from hydrogen, branched C₁-C₁₀-alkyl and unbranched C₁-C₁₀-alkyl,
R⁶ and R⁷ are each selected from hydrogen, branched C₁-C₁₀-alkyl and unbranched C₁-C₁₀-alkyl, or R⁶ and R⁷ combine to form C₂-C₁₀-alkylene,
R³ is selected from branched C₁-C₁₀-alkyl and unbranched C₁-C₁₀-alkyl,
(b) at least one polysiloxane,
(c) at least one solid material based on silicon dioxide,
(d) and water.

2. The process according to claim 1 wherein said treating is effected in the presence of
(e) at least one protective colloid.

3. The process according to claim 1 or 2 wherein at least one alkali metal or ammonium salt of a copolymer (a) has a dynamic viscosity in the range from 30 to 1500 mPa·s.

4. The process according to any of claims 1 to 3 wherein at least one solid material based on silicon dioxide (c) is a pyrogenic silica gel.

5. The process according to any of claims 1 to 4 wherein at least one polysiloxane (b) has a dynamic viscosity in the range from 100 to 2000 mPa·s.

6. An aqueous formulation comprising
(a) at least one alkali metal or ammonium salt of a copolymer obtainable by copolymerization of
(a1) from 1% to 20% by weight of (meth)acrylic acid,
(a2) from 2% to 20% by weight of (meth)acrylonitrile,
(a3) from 30% to 80% by weight of at least one comonomer of the general formula I 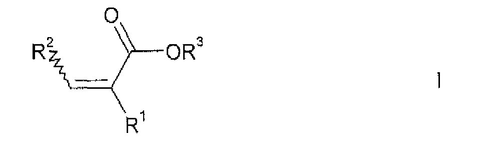
(a4) from 0% to 20% by weight of at least one amide of the general formula II 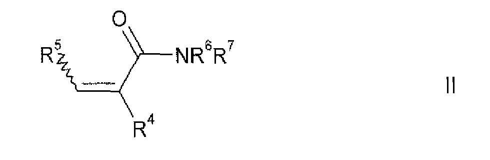 where
R¹, R², R⁴ and R⁵ are each selected from hydrogen, branched C₁-C₁₀-alkyl and unbranched C₁-C₁₀-alkyl,
R⁶ and R⁷ are each selected from hydrogen, branched C₁-C₁₀-alkyl and unbranched C₁-C₁₀-alkyl, or R⁶ and R⁷ combine to form C₂-C₁₀-alkylene,
R³ is selected from branched C₁-C₁₀-alkyl and unbranched C₁-C₁₀-alkyl,
(b) at least one polysiloxane,
(c) at least one solid material based on silicon dioxide.

7. The formulation according to claim 6 further comprising
(e) at least one protective colloid.

8. The formulation according to claim 6 or 7 wherein wherein at least one alkali metal or ammonium salt of a copolymer (a) has a dynamic viscosity in the range from 40 to 800 mPa·s.

9. The formulation according to any of claims 6 to 8, wherein at least one solid material based on silicon dioxide (c) is a pyrogenic silica gel.

10. The formulation according to any of claims 6 to 9, wherein at least one polysiloxane (b) has a dynamic viscosity in the range from 100 to 200 mPa·s.

11. A use of the formulation according to any of claims 6 to 10 for treating a textile.

12. A process for treating a textile by using a formulation according to any of claims 6 to 10.

## Revendications

1. Procédé de traitement d'un textile, **caractérisé en ce qu'**il est traité avec
(a) au moins un sel de métal alcalin ou d'ammonium d'un copolymère, qui peut être obtenu par copolymérisation de
(a1) 1 à 20 % en poids d'acide (méth)acrylique,
(a2) 2 à 20 % en poids de (méth)acrylonitrile,
(a3) 30 à 80 % en poids d'au moins un comonomère de formule générale I 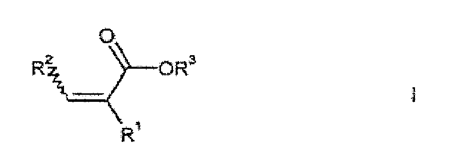
(a4) 0 à 20 % en poids d'au moins un amide de formule générale II 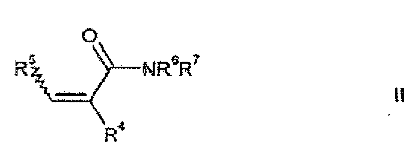 dans lesquelles les variables sont choisies de la manière suivante :
R¹, R², R⁴, R⁵ sont choisis parmi l'hydrogène, un alkyle en C₁-C₁₀ non ramifié ou ramifié,
R⁶ R⁷ sont choisis parmi l'hydrogène, un alkyle en C₁-C₁₀ non ramifié ou ramifié, ou R⁶ et R⁷ sont ensemble un alkylène en C₂-C₁₀,
R³ est choisi parmi un alkyle en C₁-C₁₀ non ramifié ou ramifié,
(b) au moins un polysiloxane,
(c) au moins un matériau solide à base de dioxyde de silicium,
(d) et de l'eau.

2. Procédé selon la revendication 1, **caractérisé en ce que** le traitement est réalisé en présence de
(e) au moins un colloïde protecteur.

3. Procédé selon la revendication 1 ou 2, **caractérisé en ce qu'**au moins un sel de métal alcalin ou d'ammonium d'un copolymère (a) présente une viscosité dynamique dans la plage allant de 30 à 1 500 mPa·s.

4. Procédé selon l'une quelconque des revendications 1 à 3, **caractérisé en ce qu'**au moins un matériau solide à base de dioxyde de silicium (c) est un gel de silice pyrogène.

5. Procédé selon l'une quelconque des revendications 1 à 4, **caractérisé en ce qu'**au moins un polysiloxane (b) présente une viscosité dynamique dans la plage allant de 100 à 2 000 mPa·s.

6. Formulation aqueuse, contenant
(a) au moins une sel de métal alcalin ou d'ammonium d'un copolymère, qui peut être obtenu par copolymérisation de
(a1) 1 à 20 % en poids d'acide (méth)acrylique,
(a2) 2 à 20 % en poids de (méth)acrylonitrile,
(a3) 30 à 80 % en poids d'au moins un comonomère de formule générale I 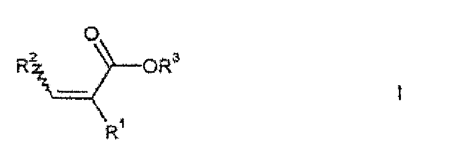
(a4) 0 à 20 % en poids d'au moins un amide de formule générale II 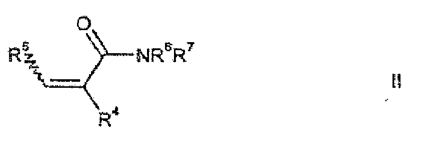 dans lesquelles les variables sont choisies de la manière suivante :
R¹, R², R⁴, R⁵ sont choisis parmi l'hydrogène, un alkyle en C₁-C₁₀ non ramifié ou ramifié,
R⁶, R⁷ sont choisis parmi l'hydrogène, un alkyle en C₁-C₁₀ non ramifié ou ramifié, ou R⁶ et R⁷ sont ensemble un alkylène en C₂-C₁₀,
R³ est choisi parmi un alkyle en C₁-C₁₀ non ramifié ou ramifié,
(b) au moins un polysiloxane,
(c) au moins un matériau solide à base de dioxyde de silicium.

7. Formulation selon la revendication 6, **caractérisée en ce qu'**elle contient également
(e) au moins un colloïde protecteur.

8. Formulation selon la revendication 6 ou 7, **caractérisée en ce qu'**au moins un sel de métal alcalin ou d'ammonium d'un copolymère (a) présente une viscosité dynamique dans la plage allant de 40 à 800 mPa·s.

9. Formulation selon l'une quelconque des revendications 6 à 8, **caractérisée en ce qu'**au moins un matériau solide à base de dioxyde de silicium (c) est un gel de silice pyrogène.

10. Formulation selon l'une quelconque des revendications 6 à 9, **caractérisée en ce qu'**au moins un polysiloxane (b) présente une viscosité dynamique dans la plage allant de 100 à 200 mPa·s.

11. Utilisation de formulations selon l'une quelconque des revendications 6 à 10 pour le traitement d'un textile.

12. Procédé de traitement d'un textile utilisant des formulations selon l'une quelconque des revendications 6 à 10.
